Europäisches Patentamt

European Patent Office

Office européen des brevets

(11) Veröffentlichungsnummer : **0 008 623**
B1

(12) **EUROPÄISCHE PATENTSCHRIFT**

(45) Veröffentlichungstag der Patentschrift :
05.10.83

(51) Int. Cl.³ : **B 29 D** 9/00, B 32 B 27/32,
H 01 G 4/20

(21) Anmeldenummer : 79102170.2

(22) Anmeldetag : 29.06.79

(54) Biaxial orientierte Polypropylen-Verbundfolie und ihre Verwendung.

(30) Priorität : 05.07.78 JP 80881/78

(43) Veröffentlichungstag der Anmeldung :
19.03.80 Patentblatt 80/06

(45) Bekanntmachung des Hinweises auf die Patenterteilung : 05.10.83 Patentblatt 83/40

(84) Benannte Vertragsstaaten :
BE DE FR GB

(56) Entgegenhaltungen :
DE A 1 769 026
DE A 2 722 087
DE B 1 161 679
DE B 1 694 694
US A 3 502 528

(73) Patentinhaber : TORAY INDUSTRIES, INC.
2, Nihonbashi-Muromachi 2-chome Chuo-ku
Tokyo 103 (JP)

(72) Erfinder : Yamane, Toshihiro
13-17, Jingucho, Otsu-shi
Shiga-ken (JP)
Erfinder : Tanaka, Megumu
3-739-16 Midori-cho, Omihachiman-shi
Shiga-ken (JP)
Erfinder : Wada, Eiichi
2049-46 Noji-cho, Kusatsu-shi
Shiga-ken (JP)

(74) Vertreter : Wettlauffer, Willy, Dr. et al
Kalle Niederlassung der Hoechst AG Rheingaustrasse 190 Postfach 3540
D-6200 Wiesbaden 1 (DE)

## Biaxial orientierte Polypropylen-Verbundfolie und ihre Verwendung

Die vorliegende Erfindung betrifft eine biaxial orientierte Polypropylenfolie, die sich gut mit Öl benetzen läßt und die insbesondere als matte Folie mit guter Dickenverteilung und, durch die Rauhigkeit der aufgebrachten Schicht zur Herstellung von getränkten Kondensatoren gut geeignet ist.

Wegen ihres geringen dielektrischen Verlustfaktors und ihrer hohen dielektrischen Durchschlagsfestigkeit werden Polypropylenfolien bereits für Kondensatoren von geringer Größe und niedrigem Gewicht verwendet. Im Vergleich zu der Menge an Papier, die für diesen Zweck verwendet wird, werden verhältnismäßig sehr wenig Polypropylenfolien für getränkte Kondensatoren eingesetzt, weil sich Polypropylenfolien im allgemeinen schlechter mit Öl benetzen lassen als Papier.

Um den Nachteil der mangelnden Benetzbarkeit zu beseitigen, sind bereits verschiedene Verfahren zur Aufrauhung der Folienoberfläche vorgeschlagen worden. Eines dieser Verfahren besteht in einer mechanischen Aufrauhung der Folienoberfläche z. B. durch Prägewalzen oder durch Bürsten. Bisher sind derartige mechanische Verfahren zur Erhöhung der Rauhigkeit, d. h. der Anzahl der Erhebungen auf der Oberfläche der Folien nicht völlig zufriedenstellend.

Wenn man beim Gießen einer Folie eine Kühlwalze mit einer rauhen Oberfläche verwendet, wird das auf die Oberfläche der Folie übertragene Muster breiter und flacher, wenn die Folie anschließend verstreckt wird. Wenn man die biaxial orientierte Folie beim Verlassen des Streckrahmens, solange sie noch verformbar ist, zwischen einer Prägewalze und einer Gummiwalze hindurchführt, läßt sich das Muster der Prägewalze wegen der elastischen Erholung des Polypropylen-Polymerisats nur schwer auf die Folienoberfläche übertragen. Wenn man die Folie in dem soeben geschilderten Verfahren hohen Drücken aussetzt, um das Muster der Walze permanent auf die Folie zu übertragen, sinkt die Glimmeinsatzspannung eines aus dieser Folie hergestellten Kondensators, weil die Folie Fehler in der Isolierung aufweist. Eine so hergestellte Folie ist am Markt nicht mehr unterzubringen.

Eine andere Technik ist ein morphologisches Verfahren zur Aufrauhung der Folienoberfläche durch Aufrauhung einer dünnen Schicht, die einen hohen Anteil an Kristallen in der β-Form aufweist.

Bei diesem Verfahren, bei dem man eine Polypropylen-Schmelze aus einer Düse auf eine Gießtrommel auflauten läßt, die man auf der kristallisationstemperatur des Polymerisats hält, kristallisiert das Polypropylen auf der Walze aus und bildet Kristalle der β-Form, die sich beim Verstrecken in die α-Form, verbunden mit einem Dichtesprung, umwandeln. Dies führt zur Aufrauhung der Folie.

Auch eine so hergestellte und biaxial gestreckte Folie ist nicht genügend aufgerauht und daher ist ihre Benetzbarkeit mit Öl für die Kondensatorherstellung nicht ausreichend. Auch mit diesem Verfahren bereitet es Schwierigkeiten, eine entsprechend hohe Anzahl von Erhebungen auf der Folienoberfläche zu erzeugen.

Dieses Verfahren besteht somit aus zwei Verfahrensschritten. Zunächst muß die Folienoberfläche stark kristallisiert werden, d. h. in der Folienoberfläche müssen kristalle der β-Form erzeugt werden. Anschließend wird die Folie durch Faserbildung netzförmig aufgerauht, indem man die Schicht mit dem hohen Anteil an Kristallen in der β-Form verstreckt.

Obwohl Polypropylen mit niedrigem Staudinger-Index nach dem ersten Verfahrensschritt stark kristallin ist, ist die Anzahl der Erhebungen auf der Oberfläche der Folie durch das hohe effektive Streckverhältnis nicht groß genug. Daher kann eine aus Polypropylen mit niedriger Viskosität hergestellte Folie nicht für die Herstellung von getränkten Kondensatoren verwendet werden. Verwendet man Polypropylen mit hohem Staudinger-Index als Ausgangsmaterial, hat eine daraus hergestellte biaxial orientierte Folie nur eine wenig aufgerauhte Oberfläche, so daß diese Folie ebenfalls in der Praxis nicht für getränkte Kondensatoren eingesetzt werden kann.

Eine weitere Variante des morphologischen Verfahrens wird in der DE-A 27 22 087 beschrieben, welche es sich zur Aufgabe gemacht hat, eine Polypropylenfolie mit isolierenden Eigenschaften und guter Imprägnierbarkeit mit Öl zu schaffen sowie ein Verfahren zur Herstellung dieser Folie anzugeben. Bei diesem Verfahren wird die Polypropylenschmelze durch eine Ringdüse zu einer schlauchförmigen Schmelze geformt, wobei die Abkühlung der Schmelze so durchgeführt wird, daß sich Kristalle der β-Form mit einem bestimmten Durchmesser bilden. Die schlauchförmige Folie wird dann durch Preßluft und bei geeigneter Temperatur biaxial verstreckt, wobei die gewünschten Oberflächeneigenschaften durch Umwandlung der Kristalle der β-Form in solche der α-Form entstehen. Die dort angegebenen Maßnahmen lassen sich aber in der Praxis nicht auf die Herstellung von Flachfolienbahnen übertragen, weil bei dem dabei üblichen zweistufigen Streckverfahren ganz andere Kräfteverhältnisse vorherrschen, wozu Polypropylen mit einem wesentlich höheren Staudinger-Index verwendet werden muß.

Wird die gegossene Folie längere Zeit bei relativ hoher Temperatur gehalten, nämlich ihrer Kristallisationstemperatur, wird die Folie zwar stark kristallin, wenn man sie dann jedoch verstreckt und dabei auffasert, wird die Folie entweder undurchsichtig oder sie reißt während der Produktion ab. Um aus Polypropylen mit hohem Staudinger-Index eine stark kristalline Gießfolie herzustellen, ist entweder eine Gießtrommel mit außergewöhnlich großem Durchmesser oder ein sehr langes Wasserbad erforderlich.

Mit Rücksicht auf eine leistungsfähige Folienproduktion ist dieses Verfahren für eine kommerzielle Folienherstellung ungeeignet. Bei der morphologischen Methode wird die Produktionsgeschwindigkeit für matte Folien wesentlich durch die Größe der oben beschriebenen Anlage bestimmt.

Eine Folie, die nach der morphologischen Methode hergestellt wurde, hat etliche Nachteile. Einer dieser Nachteile, ist, daß die Verteilung der Oberflächenrauhigkeit der Folie nicht gleichmäßig genug ist. Die Verteilung der Rauhigkeit der Folie ist immer abhängig von den vorhandenen Schwankungen in der Temperatur der Gießvorrichtung. Die oben genannten Anlagen enthalten normalerweise eine Gießtrommel und, bei direkter Erhitzung, ein Wasserbad, bzw. bei indirekter Erhitzung einen Infrarot-Strahler. Die Temperaturen dieser Maschinenteile variieren beträchtlich, bedingt durch die Temperaturverteilung innerhalb der Wärmequelle. Der Kristallisationsgrad der Folie wird bestimmt durch die Oberflächentemperatur der Gießvorrichtung und durch die Dauer des Kontaktes zwischen Folie und Gießvorrichtung, da die Folie mitten im Kristallisationsvorgang rasch abgekühlt wird. Durch die unterschiedliche Verteilung der Rauhigkeit der Folie ergeben sich Volumenabweichungen bei den daraus hergestellten Kondensatoren.

Ein weiterer Nachteil ist, daß auch die Dickstellen der Folie nicht gleichmäßig genug verteilt sind. Dieser Nachteil entsteht durch die mangelnde Gleichmäßigkeit der kritischen Fläche zwischen der aufgerauhten Schicht und der nichtaufgerauhten Schicht. Der Kristallisationsgrad der Folie ändert sich ständig von der Oberfläche der Folie zu ihrer Mitte hin, aber die Verteilung des Kristallisationsgrades innerhalb der kritischen, aufgerauhten Oberfläche wird durch die Temperaturverteilung der Gießvorrichtung hervorgerufen.

Daher ist es schwierig, die Dickenschwankungen einer nach der morphologischen Methode hergestellten Folie zu kontrollieren. Wenn die Dickenschwankungen zu stark werden, ist die Folie wegen der niedrigen dielektrischen Durchschlagsfestigkeit der daraus hergestellten Kondensatoren praktisch nicht zu verwenden. Sogar wenn die Folie nur geringe Dickenschwankungen aufweist, wird damit die Kapazität des Kondensators teilweise verändert. Daher bereitet bei einer kommerziellen Produktion z. B. die Qualitätskontrolle der Kondensatoren Schwierigkeiten.

Gegenstand der vorliegenden Erfindung ist eine biaxial orientierte Polypropylenfolie zu schaffen, die die geschilderten Nachteile nicht aufweist.

Gelöst wird die gestellte Aufgabe durch eine biaxial orientierte Polypropylenlaminatfolie, deren kennzeichnendes Merkmal darin besteht, daß sie aus einer Polypropylenträgerfolie und einer auf wenigstens einer Seite aufgebrachten Schicht aus Polypropylen besteht, dessen Staudinger-Index (Intrinsic viscosity) im wenigster 0,2 Einheiten niedriger ist als der des Polypropylens für die Trägerfolie und wobei die Schicht eine durchschnittliche Oberflächenrauhigkeit zwischen 0,15 μm und 1,0 μm besitzt und die Anzahl der Erhebungen auf der Oberfläche der Schicht wenigstens 10 000 cm² beträgt.

Gemäß der vorliegenden Erfindung wird die matte Oberfläche der Folie durch die Auffaserung der aufgebrachten Schicht hervorgerufen. Die Benetzbarkeit der Folie mit Öl hängt von der erzeugten Oberflächenrauhigkeit ab.

Das Verfahren zur Herstellung einer biaxial orientierten Folie mit einer Polypropylenschicht, deren Staudinger-Index unterhalb desjenigen der Trägerfolie liegt, besteht darin, daß man zwei Polypropylen-Polymerisat-Schmelzen bei einer Temperatur bis zu 20 °C unter und 20 °C über der Kristallisationstemperatur ($T_c$) des Polypropylens vergießt, die Vorfolie einige Sekunden lang auf der Walze beläßt, so daß der Anteil an Kristallen in der β-Form (K-Wert) höher als 0,12 ist, und die Folie dann in beiden Richtungen im Verhältnis bis 1 : 10 verstreckt bei einer Temperatur, die zwischen $T_c$ + 20 °C und der Schmelztemperatur der Trägerfolie liegt. Für die Trägerfolie kann isotaktisches Polypropylen, ein Propylen-Mischpolymerisat, oder eine Polypropylenmischung verwendet werden.

Für die Verwendung in Kondensatoren ist es sehr vorteilhaft, wenn das Polypropylen sehr rein ist, jedoch können auch Polypropylen-Mischungen und Polypropylen-Mischpolymerisate, die einen geringen Anteil eines anderen α-Olefin-Monomers und -polymers enthalten, für diese Zwecke verwendet werden. Das Polymerisat sollte möglichst keine oder nur Spuren von katalysatorresten, geringe Stabilisatormengen und keine anderen Zusätzte enthalten.

Das Polypropylen, das für die aufgebrachte(n) Schicht(en) gemäß dieser Erfindung verwendet wird, ist ein isotaktisches Polypropylen mit einem niedrigeren Staudinger-Index als dem der Trägerfolie, vorzugsweise ein Polypropylen, dessen Staudinger-Index 0,2 unter der Eigenviskosität des Polypropylens für die Trägerfolie liegt. Der Staudinger-Index des Polymerisats wird bei 135 °C in einer Tetralinlösung gemessen. Dem Polypropylen mit der niedrigeren Viskosität gemäß dieser Erfindung sollte ebenfalls kein Zusatz beigefügt sein.

Das für die aufgebrachte Schicht verwendete Polypropylen mit der niedrigeren Viskosität und hoher Kristallisationsrate eignet sich wegen des kurzen Kontaktes zwischen der Oberfläche der Trommel und der Folie für ein wirtschaftliches Produktionsverfahren bei hoher Geschwindigkeit. Der Staudinger-Index des gemäß der Erfindung als Schicht aufgebrachten Polypropylens sollte vorzugsweise bei efwa 1,40 liegen.

Wegen der guten Verstreckbarkeit derartiger Folien sollte der Staudinger-Index des Polypropylens für die Trägerfolie hoch sein. Der Staudinger-Index des Polypropylens für die Trägerfolie sollte höher als 2,00 sein und derjenige der aufgebrachten Schicht unter 2,00 liegen ; vorzugsweise sollte das Polypropylen für die Trägerfolie einen Staudinger-Index zwischen 1,80 und 2,40 und für die aufgebrachte(n) Schicht(en) einen Staudinger-Index zwischen 1,60 und 1,40 besitzen.

Die durchschnittliche Oberflächenrauhigkeit ($R_a$) der erfindungsgemäß aufgebrachten Schicht(en) sollte oberhalb 0,15 μm liegen, vorzugsweise oberhalb 0,2 μm, um eine gute Benetzbarkeit mit Öl zu garantieren.

Die durchschnittliche Oberflächenrauhigkeit der Folie wird nach der JIS-(= Japanese Industrial Standard)-Methode B-061 gemessen und entspricht der folgenden Gleichung

$$R_a = \frac{a_1 + a_2 + a_3 + \ldots\ldots\ldots a_n}{1} = \frac{\sum_1^n a_n}{1}$$

worin

$a_n$ die Flächen der Erhebungen oder Vertiefungen von n, und
1 die Längeneinheit der Folie bedeuten.

Wenn die durchschnittliche Oberflächenrauhigkeit der Folie unterhalb von 0,15 μm liegt, eignet sich die Folie wegen ihrer schlechten Benetzbarkeit nicht für die Herstellung von imprägnierten Kondensatoren. Die Anzahl der Erhebungen je cm² der Oberfläche der aufgebrachten Schicht wird errechnet, indem man die Anzahl der Erhebungen pro cm in der Längsrichtung mit der Anzahl der Erhebungen pro cm in der Querrichtung multipliziert. Wenn die Anzahl der Erhebungen pro cm² der Oberfläche der aufgebrachten Schicht(en) mehr als 10 000 beträgt, vorzugsweise 30 000/cm², kann die Folie gut mit Öl getränkt werden, da die Fähigkeit der Folie, Öl aufzunehmen, von der Anzahl der Erhebungen auf der Oberfläche der aufgebrachten Schicht(en) abhängt.

Wenn die Anzahl der Erhebungen pro cm² der Oberfläche der aufgebrachten Schicht weniger als 10 000 beträgt, läßt sich die Folie nicht für imprägnierte Kondensatoren verwenden, weil sie dann nur schlecht mit Öl getränkt werden kann.

Wenn die Folie bei der Herstellung durch die Zone geführt wird, wo die Kristallisationstemperatur eingehalten wird, stellt sich in der aufgebrachten Schicht mit der niedrigeren Viskosität ein höherer Kristallisationsgrad ein als in der Trägerfolie. Daher ist die Oberflächenrauhigkeit und die Anzahl der Erhebungen auf der Oberfläche der Verbundfolie gemäß der Erfindung höher als bei einer einfachen Folie. Die Verbundfolie gemäß der Erfindung hat für die Verwendung als Folie für imprägnierte Kondensatoren günstigere Eigenschaften.

Der Gehalt der Kristalle in β-Form wird nach einer in Band 75 der CH-Zeitschrift « Die Makromolekulare Chemie », auf den Seiten 135 bis 137 (1964) beschriebenen Methode gemessen.

Der K-Wert der Vorfolie soll über 0,12 liegen, vorzugsweise über 0,20. Wenn der K-Wert weniger als 0,12 beträgt, hat die biaxial orientierte Folie nur eine geringe Oberflächenrauhigkeit und dementsprechend eine geringe Anzahl von Erhebungen auf ihrer Oberfläche, so daß sie nur schlecht mit Öl benetzt werden kann. Um zu erreichen, daß der K-Wert der Vorfolie mehr als 0,12 beträgt, muß die Folie einige Sekunden, vorzugsweise mehr als 6 Sekunden, bei einer Temperatur von $(T_c \pm 20\,°C)$ auf der Kühlwalze gehalten werden.

Die folgenden Beispiele dienen dazu, die Erfindung näher zu erläutern, sie sollen deren Umfang jedoch nicht einschränken.

Geschmolzenes Polypropylen-Polymerisat mit einem Staudinger-Index von mehr als 2,0 und Polypropylen mit einem Staudinger-Index von weniger als 2,0 werden bei einer Temperatur zwischen 200 und 280 °C derart durch eine Zweifachdüse ausgestoßen, daß eine zweilagige Folie entsteht. Die Dicke der aufgebrachten Schicht läßt sich dadurch festlegen, indem man den Ausstoß des zweiten Extruders entsprechend einstellt.

Will man das Verhältnis zwischen der Dicke der aufgebrachten Schicht und der Dicke der Trägerfolie variieren, muß man die Form der Zweifachdüse ändern. Während sich bei Verwendung einer Einfachdüse die beiden Ströme aus Polypropylen-Schmelze vereinigen, entsteht bei Verwendung eines Adapters eine zweilagige Folie.

Die beiden Lagen aus Polypropylen-Schmelze werden bei einer Temperatur von $T_c \pm 20\,°C$, d. h. normalerweise einer Temperatur zwischen 80 und 130 °C, vorzugsweise einer Temperatur zwischen 90 und 115 °C, aus einer Düse auf eine Kühlwalze extrudiert, wobei eine nichtorientierte Folie entsteht. Der Kontakt zwischen der Kühlwalze und der Folie sollte möglichst lang sein und normalerweise von einigen Sekunden bis zu etwa 50 Sekunden dauern. Durch die Dauer des Kontaktes zwischen der Kühlwalze und der Folie wird der Gehalt an Kristallen der β-Form in der aufgebrachten Schicht bestimmt ; der K-Wert der Vorfolie sollte mehr als 0,12 betragen.

Um die Dauer des Kontaktes zwischen der Kühlwalze und der Folie beim Gießprozeß zu verlängern, empfiehlt es sich, die Geschwindigkeit des Folienherstellungsprozesses herabzusetzen und Kühlwalzen mit großem Durchmesser zu verwenden.

Die erfindungsgemäße Folie wird unter üblichen Streckbedingungen orientiert, d. h. daß die Strecktemperatur höher als $T_c + 20\,°C$, normalerweise höher als 125 °C ist und daß das Streckverhältnis der Folie zwischen 1 : 3 und 1 : 6 in der Längsrichtung und zwischen 1 : 5 und 1 : 10 in der Querrichtung beträgt.

Die biaxial verstreckte Polypropylen-Verbundfolie besitzt gute mechanische Eigenschaften, läßt sich gut mit Öl tränken, und weist eine hohe dielektrische durchschlagsfestigkeit auf, weil sie eine hohe Oberflächenrauhigkeit besitzt und die Erhebungen auf der Oberfläche der aufgebrachten Schicht gleichmäßig verteilt sind. Die Verbundfolie gemäß der vorliegenden Erfindung kann für elektrische Zwecke verwendet werden, also z. B. in elektrischen Kabeln und für kleine, leichte und dabei sehr haltbare Kondensatoren und Transistoren.

Die folgenden Beispiele sollen dem weiteren Verständnis der Erfindung dienen :

4

## Beispiel 1

Die Trägerfolie bestand aus 95 prozentigem isotaktischem Polypropylen mit einem Staudinger-Index von 2,35 und die aufgebrachte Schicht aus einem 95 prozentigen isotaktischen Polypropylen-Polymerisat mit einem Staudinger-Index von 1,60.

Das Polypropylen für die Trägerfolie wurde bei einer Temperatur von 250 °C aus dem Hauptextruder und das Polypropylen für die Schicht aus einem zweiten Extruder bei 230 °C ausgepreßt. Die beiden Polypropylen-Polymerisat-Schmelzen wurden aus einer Zweifachdüse mit einer 1,6 mm weiten Öffnung auf eine auf 95 °C gehaltene Kühlwalze extrudiert. Die so erhaltene Vorfolie besaß eine Stärke von 380 μm und einen K-Wert von 0,202. Die Folie war 10 Sekunden lang mit der Walze in Kontakt. Anschließend wurde die Folie bei 135 °C auf das 4-fache ihrer ursprünglichen Länge und bei einer Temperatur zwischen 155 und 160 °C auf das 7,8-fache ihrer ursprünglichen Breite verstreckt. Man erhielt so eine biaxial orientierte Folie von 12 μm Dicke.

Die erhaltene Folie war stark trüb und eignete sich gut für die Herstellung von ölimprägnierten Kondensatoren. Die Trübung der Folie hängt von dem Grad der Oberflächenrauhigkeit der Folie ab.

Wenn man nach dem oben genannten Verfahren eine biaxial orientierte Folie herstellte, die nur aus dem Polypropylen der Trägerfolie bestand, so war die Folie für die praktische Anwendung als Kondensatorfolie ungeeignet, weil sie sich nur schlecht mit Öl benetzen ließ.

### TABELLE 1

| | Beispiel 1 Verbundfolie Trägerfolie/ aufgebrachte Schicht | Vergleichsbeispiel 1 einfache Folie |
|---|---|---|
| Staudinger-Index ($\eta$) | 2,35/1,60 | 2,35 |
| Dicke ($\mu$m) | 12 (9/3) | 12 |
| Trübung (%) | 29,6 | 0,5 |
| K-Wert der Vorfolie | 0,202 | 0,06 |
| Imprägnier-Wert (%) | 14,0 | 2,5 |
| Oberflächenrauhigkeit ($\mu$m) | 0,21 | 0,105 |

## Beispiel 2

Die Trägerfolie bestand aus 95 prozentigem isotaktischem Polypropylen mit einem Staudinger-Index von 2,20 und das aufgebrachte Polymerisat war ein 95 prozentiges isotaktisches Polypropylen mit einem Staudinger-Index von 1,45.

Die beiden Polypropylen-Polymerisate wurden nach dem gleichen Verfahren extrudiert wie in Beispiel 1, aber mit unterschiedlichen Geschwindigkeiten, d. h. mit verschieden langem Kontakt zwischen der Walze und der Folie.

Es entstanden biaxial orientierte Folien von 15 μm Dicke.

Trübung und Aufnahmefähigkeit für Öl der oben genannten Folien wurden gemessen und sind in Tabelle 2 aufgeführt. Die Eigenschaften einer einfachen Folie, die einmal aus dem Polypropylen der Trägerfolie und einmal aus dem Polypropylen der aufgebrachten Schicht hergestellt wurde, sind ebenfalls in Tabelle 2 dargestellt. Der Vorteil der Koextrusion besteht darin, daß die Folie mit hoher Geschwindigkeit hergestellt werden kann, d. h. nach einem wirtschaftlich günstigen Verfahren.

(Siehe Tabellen Seite 6 f.)

5

TABELLE 2

| Kontakt zwischen Gießtrommel und Folie | Beispiel 2 | | Vergleichsbsp. 2 | | Vergleichsbsp. 3 | |
|---|---|---|---|---|---|---|
| | Verbundfolie gem. d. Erf. | | Einfache Folie | | Einfache Folie | |
| | Staudinger-Index Trägerfolie/aufgebrachte Schicht 2,20 /1,45 | | Staudinger-Index $(\eta)$ 2,20 | | Staudinger-Index $(\eta)$ 1,45 | |
| Zeit (S) | Trübung (%) | Imprägnier-barkeit (%) | Trübung (%) | Imprägnier-barkeit (%) | Trübung (%) | Imprägnier-barkeit (%) |
| 20 | 35 | 14,5 | 5 | 3,0 | 10 | 9,0 |
| 13 | 25 | 13,0 | 2 | 2,6 | 5 | 3,2 |
| 8 | 18 | 11,0 | 1 | 2,5 | 3 | 3,0 |

Beispiel 3

Für die Trägerfolie wurde ein 95 prozentiges isotaktisches Polypropylen mit einem Staudinger-Index von 2,10 verwendet, während die aufgebrachte Schicht aus 95 prozentigem isotaktischem Polypropylen mit einem Staudinger-Index von 1,60 bestand.

Die elektrischen Eigenschaften einer 15 µm dicken Verbundfolie, die gemäß dem in Beispiel 1 beschriebenen Verfahren hergestellt wurde, sind für praktische Zwecke ausgezeichnet.

TABELLE 3

| Physikalische und elektrische Eigenschaft der Folie | Wert |
|---|---|
| Trübung (%) | 18,0 |
| Imprägnierbarkeit (%) | 14,0 |
| Durchschlagsspannung einer Flachfolie Gleichstrom, kV | 9,11 (7,5 Min.) |
| Dielektrizitätskonstante (20 °C, 1 kHz) | 2,18 |
| Dielektrischer Verlustfaktor (tangens δ) (20 °C, 1 kHz) (%) | 0,011 5 |

Die in den Beispielen angegebenen Werte wurden nach folgenden Methoden ermittelt :

Die Dicke der Folie wurde nach der JIS (Japanese Industrial Standard)-Methode C-2318 gemessen.

Die Trübung der Folie wurde nach JIS-Methode K-6714 gemessen. Die Imprägnierbarkeit der Folie wurde nach der folgenden Gleichung ermittelt :

$$\text{Imprägnierbarkeit} = C - C_o/C_o \times 100 \ (\%)$$

In dieser Gleichung bedeutet C die elektrische Kapazität eines Kondensators, der im Vakuum mit Isolieröl Nr. 1 gemäß JIS getränkt und im Vakuum bei 60 °C getrocknet wurde. $C_o$ ist die Kapazität des Kondensators, ehe er mit Öl getränkt wurde. C und $C_o$ werden bei einer Temperatur von 20 °C und mit 1 kHz mittels einer kapazitätsbrücke der Firma General Radio Co. gemessen. Ein Kondensator mit einer elektrischen Kapazität von etwa 0,2 µF wurde hergestellt aus 6 µm dicker und 80 mm breiter Aluminiumfolie sowie der erfindungsgemäßen Folie.

Die Imprägnierbarkeit der Folie entspricht einer einfachen Addition, nämlich einer Steigerung der elektrischen Kapazität des Kondensators durch die Imprägnierung mit dem Isolieröl, weil der Kondensator vor der Imprägnierung mit Öl zwischen der Folie und der Aluminiumfolie oder zwischen verschiedenen Lagen der Folie winzige Hohlräume aufweist, deren spezifische Dielektrizitätskonstante gleich 1 ist,

# 0 008 623

und diese winzigen Hohlräume zwischen verschiedenen Lagen der Folie oder zwischen Folie und Aluminiumfolie dann ausgefüllt werden mit Isolieröl, d. h. Öl Nr. 1 gemäß JIS, dessen Dielektrizitätskonstante gleich 2,1 ist.

Bei Folien von einer Stärke von mehr als 20 µm wird die elektrische Durchschlagsspannung nach JIS-Methode C-2318 gemessen.

Auch die Dielektrizitätskonstante und der dielektrische Verlustfaktor (Tangens δ) der Folie werden nach der JIS-Methode C-2318 bestimmt.

## Beispiel 4

Eine Verbundfolie wurde nach dem gleichen Verfahren hergestellt wie in Beispiel 1. Der Kontakt zwischen der Walze und der Folie dauerte 6 Sekunden. Die physikalischen Eigenschaften der Folie gehen aus Tabelle 4 hervor :

### TABELLE 4

|  | Verbundfolie Trägerfolie/ Schicht | Einfache Folie |
|---|---|---|
| Staudinger-Indes (η) | 2,35/1,60 | 1,45 |
| Dicke (µm) | 12 (9/3) | 15 |
| Trübung (%) | 15,2 | 9,0 |
| Abweichungen in der Trübung (%) | 18,2 | 28,3 |
| Abweichungen in der Dicke (%) | 10,4 | 18,2 |

Die physikalischen Eigenschaften einer einfachen Folie, die man aus einem Polypropylen, das sonst nur für die Herstellung der aufgebrachten Schichten Verwendung findet, hergestellt hatte, gehen ebenfalls aus Tabelle 4 hervor. Die Abweichungen in der Dicke und die Verteilung der Trübung (Abweichungen in der Oberflächenrauhigkeit) sind bei der erfindungsgemäßen Verbundfolie besser als bei der einfachen Folie.

## Beispiel 5

97 prozentiges isotaktisches Polypropylen mit einem Staudinger-Index von 2,20 wurde durch den Hauptextruder mit einem Durchmesser von 150 mm zur Zweifachdüse transportiert und 93 prozentiges isotaktisches Polypropylen mit einem Staudinger-Index von 1,60 wurde durch den zweiten Extruder ebenfalls zur Zweifachdüse befördert. Die aus der Zweifachdüse ausströmenden Polypropylen-Schmelzen wurden auf eine Kühlwalze extrudiert, die eine Temperatur von 97 °C hatte. Der Kontakt zwischen der Walze und der Folie beim Vergießen betrug 20 Sekunden. Die so erhaltene Vorfolie wurde dann bei 130 °C im Verhältnis 1 : 4,5 in der Längsrichtung und bei 160 °C im Verhältnis 1 : 8 in der Querrichtung verstreckt. Nach einer Relaxation von 10 % der Folienbreite erhielt man eine 15 µm dicke, biaxial orientierte Polypropylenfolie ; die Dicke der aufgebrachten Schicht betrug dabei 3 µm. Die Oberfläche der so erhaltenen Folie ist durch Auffaserung aufgerauht. Die Anzahl der Erhebungen auf der Oberfläche der Schicht betrug zwischen 30 000/cm² und 50 000/cm².

Anschließend wurde die so hergestellte Folie in der Längsrichtung in Streifen von 10 cm Breite aufgeschnitten, die Streifen wurden zusammen mit Aluminiumfolie aufgewickelt, und das Ganze wurde dann im Vakuum mit Isolieröl getränkt. Ein aus dieser Folie hergestellter Kondensator besaß gute elektrische Eigenschaften, wie aus Tabelle 5 hervorgeht.

Der dielektrische Verlustfaktor (Tangens δ) und die elektrische Kapazität, die in Tabelle 5 aufgeführt sind, werden mit Hilfe einer Kapazitätsbrücke der Firma General Radio Co. gemessen, und der Durchgangswiderstand der Folie wurde mit Hilfe des ULTRA MEGOHMMETERs der Firma TOA Electronics ermittelt. Der Isolationswiderstand ist das Produkt aus der Kapazität des Kondensators und seinem Durchgangswiderstand bei gleicher Temperatur.

7

TABELLE 5

| | Elektrische Eigenschaft | Temperatur (°C) | Einheit | Stärke der Folie (15 μm) |
|---|---|---|---|---|
| | Dielektrischer | 20 | % | 0,017 2 |
| | Verlust | 50 | | 0,015 3 |
| | (Tangens δ) | 80 | | 0,015 5 |
| | Isolations- | 20 | ΩF | 1.200,000 |
| | widerstand | 50 | | 108,000 |
| | | 80 | | 37,000 |
| | Elektrische Kapazität | 20 | % | — |
| | in Abhängigkeit von | 50 | | − 0,52 |
| | der Temperatur | 80 | | − 1,38 |

Aufbau : nur aus Folie (drei Lagen) bestehender Kondensator
Folie : 10 cm breit
Elektrode : 6 μm starke und 8 cm breite Aluminiumfolie
Imprägnierungsmittel : JIS-Mineralöl
Kapazität : 0,2 μF

### Ansprüche

1. Biaxial orientierte Polypropylenlaminatfolie, dadurch gekennzeichnet, daß sie aus einer Polypropylenträgerfolie und einer auf wenigstens einer Seite aufgebrachten Schicht aus Polypropylen besteht, dessen Staudinger-Index um wenigstens 0,2 Einheiten niedriger ist als der des Polypropylens für die Trägerfolie und wobei die Schicht eine durchschnittliche Oberflächenrauhigkeit zwischen 0,15 μm und 1,0 μm besitzt und die Anzahl der Erhebungen auf der Oberfläche der Schicht wenigstens 10 000/cm² beträgt.

2. Folie nach Anspruch 1, dadurch gekennzeichnet, daß der K-Wert der Schicht auf der noch nicht orientierten Vorfolie > 0,12 ist.

3. Folie nach einem der Ansprüche 1 oder 2, dadurch gekennzeichnet, daß der Staudinger-Index des Polypropylens für die Trägerfolie über 2,0 liegt.

4. Folie nach einem der Ansprüche 1 bis 3, dadurch gekennzeichnet, daß der Staudinger-Index des Polypropylens für die Schicht zwischen 1,40 und 1,60 liegt.

5. Verwendung einer Folie nach einem der Ansprüche 1 bis 4 zur Herstellung von Kondensatoren.

### Claims

1. Biaxially oriented film of a polypropylene laminate, comprised of a polypropylene support film, which at least on one side is coated with a layer of a polypropylene having a Staudinger index lying at least 0.2 units below that of the polypropylene used for the support film, the coated layer having a surface roughness comprised between 0.15 μm and 1.0 μm and the number of elevations present on the surface of the layer amounting to at least 10.000/cm².

2. Film as claimed in Claim 1, wherein the K-value of the layer present on the non-oriented pre-film is > 0.12.

3. Film as claimed in Claims 1 or 2, wherein the polypropylene used for the support film has a Staudinger index of more than 2.0.

4. Film as claimed in any of Claims 1 to 3, wherein the Staudinger index of the polypropylene used for the layer is between 1.40 and 1.60.

5. Use of a film as claimed in any of Claims 1 to 4 in the manufacture of capacitor films.

### Revendications

1. Feuille stratifiée de polypropylène biaxialement orientée, caractérisée en ce qu'elle est constituée d'une feuille de support de polypropylène et d'une couche appliquée au moins sur une face et constituée de polypropylène, dont l'indice de Staudinger est d'au moins de 0,2 unité inférieur à celui du polypropylène utilisé pour la feuille de support, la couche ayant une rugosité de surface moyenne comprise entre 0,15 et 1,0 μm et le nombre d'élévations sur la surface de la couche atteignant au moins 10 000/cm².

2. Feuille selon la revendication 1, caractérisée en ce que la valeur K de la couche sur la pré-feuille non encore orientée est supérieure à 0,12.

3. Feuille selon l'une des revendications 1 ou 2, caractérisée en ce que l'indice de Staudinger du polypropylène pour la feuille de support est supérieur à 2,0.

4. Feuille selon l'une quelconque des revendications 1 à 3, caractérisée en ce que l'indice de Staudinger du polypropylène pour la couche est compris entre 1,40 et 1,60.

5. Utilisation d'une feuille selon l'une quelconque des revendications 1 à 4 pour la fabrication de condensateurs.